# EUROPÄISCHE PATENTSCHRIFT

(11) **EP 2 443 434 B1**
(45) Veröffentlichungstag und Bekanntmachung des Hinweises auf die Patenterteilung: **02.12.2015**
(21) Anmeldenummer: 10723150.8
(22) Anmeldetag: 16.06.2010
(51) Int. Cl.: G01N 21/03, G01N 21/05, G01N 21/35, G01N 21/09

(54) **BEHEIZBARE DURCHFLUSSMESSZELLE**
HEATABLE FLOW-THROUGH MEASURING CELL
CELLULE DE MESURE DE DÉBIT POUVANT ÊTRE CHAUFFÉE

(30) Priorität: 19.06.2009 DE 102009029949
(43) Veröffentlichungstag der Anmeldung: 25.04.2012
(73) Patentinhaber: Siemens Aktiengesellschaft, 80333 München (DE)
(72) Erfinder: LUDWIG, Michael, 76149 Karlsruhe (DE)
(86) Internationale Anmeldenummer: PCT/EP2010/058447
(87) Internationale Veröffentlichungsnummer: WO 2010/146079

(56) Entgegenhaltungen:
- GB-A- 1 500 740
- JP-A- 57 163 845
- JP-A- 59 035 131
- JP-A- 2002 267 596
- JP-A- 2008 164 304
- US-A- 5 223 716
- US-A1- 2006 263 256

## Beschreibung

Die Erfindung betrifft eine beheizbare Durchflussmesszelle für einen Gasanalysator.

Aus der EP 1 767 922 A2 ist eine Durchflussmesszelle mit einem Rohr bekannt, das an beiden Enden mit jeweils einem beheizbaren Endstück und einen darin gehaltenen strahlungsdurchlässigen Fenster abgeschlossen ist. Das Messgas wird an einem Rohrende zugeführt und an dem anderen abgeführt, oder bevorzugt in der Rohrmitte zugeführt und an beiden Rohrenden abgeführt.

Aus der US 4 205 550 A ist eine Durchflussmesszelle mit einem inneren Rohr aus Stahl oder Aluminium bekannt, das an beiden Enden mit jeweils einem mit Kühlrippen versehenen Endstück und einen darin gehaltenen strahlungsdurchlässigen Fenster abgeschlossen ist. Das innere Rohr ist koaxial unter Bildung eines Spaltes von einem äußeren Rohr aus Stahl oder Aluminium umgeben. Beide Rohre enthalten jeweils diametral gegenüberliegende Öffnungen wobei je nach Drehstellung des äußeren Rohres gegenüber dem inneren Rohr ein Durchlass für zu analysierende Verbrennungsgase durch die Messzelle ermöglicht oder gesperrt wird.

Aus der JP 59-035 131 AA ist eine Durchflussmesszelle aus Glas bekannt, die unter Einfügung eines wärmeleitenden und unterschiedliche Wärmeausdehnungen absorbierenden Materials, wie Silberlot, in einem beheizbaren Metallblock eingebaut ist.

Die JP 57-163 845 AA zeigt ebenfalls eine in einem beheizbaren Metallblock eingebaute Durchflussmesszelle.

US 2006/263256 A1 (Figur 1a) offenbart einen Absorptionsgasanalysator 100 umfassend eine Hauptabsorptionszelle 102, die das zu messende Probengas während der Messung enthält.

Diese Hauptzelle umfasst einen verlängerten Hohlkörper 103 mit einer z.B. zylindrischen Form aus einem korrosionsbeständigem Material wie z.B. Glas. Jeweils am Ende der Hauptabsorptionszelle 102 ist ein erstes Fenster 124 bzw. ein zweites Fenster 125 gasdicht angeordnet, die auch aus einem korrosionsbeständigem Material sind. Das zu messende Gas wird in die Messzelle über einen Einlass 104 eingeführt und über einen Auslass 106 ausgeführt. Mittels einer Strahlungsquelle 108, einem Reflektor und einem Detektor 112 wird die Absorption bzw. die Konzentration des Messgases in der Messzelle 102 gemessen. Zur Gewährleistung einer vorbestimmten Temperatur des Probengases, ist die Hauptabsorptionszelle 102 mit Temperatursteuermittel 114 versehen, die ein wesentliches Teil der Außenfläche des Körpers 103 der Messzelle 102 umgeben - gemäß D2=US2006263256 (Figur 1a) stellen diese Mittel entweder ein Rohr oder eine Schicht dar.

Im Unterschied zur In-situ-Gasanalyse wird bei der extraktiven Gasanalyse das zu analysierende Gas einem Prozess entnommen und durch eine Durchflussmesszelle geleitet, wo es spektroskopisch (NDIR, Laser usw.) analysiert wird. Dabei ist es häufig notwendig, bei höheren Temperaturen zu messen, um die Kondensation von Wasser in den Entnahmeleitungen und der Messzelle oder unerwünschte Reaktionen zu verhindern. Mit einer beheizten Messzelle können Messungen bei Temperaturen bis 200°C durchgeführt werden. Da das Messergebnis von der Messgastemperatur abhängig ist, muss die Messgastemperatur entlang der von der Messzelle gebildeten Messstrecke bis auf wenige Kelvin ortsunabhängig sein.

Um insbesondere im Falle von aggressiven Messgasen die erforderliche Temperaturbeständigkeit und Korrosionsfestigkeit zu erreichen, wird als Material für die Innenwand der Messzelle typischerweise Edelstahl verwendet. Edelstahl weist jedoch eine für Metalle vergleichsweise geringe Wärmeleitfähigkeit aus, so dass bei der Beheizung der Messzelle, insbesondere bei langgestreckten Messzellen in der Größenordnung von einem Meter, unerwünschte Temperaturgradienten auftreten können. Bislang wurde das Entstehen von Temperaturgradienten beispielsweise durch gleichmäßiges Aufbringen von Heizbändern auf die Außenseite der Messzelle, sowie ggf. Gliederung der Heizung in mehrere separat geregelte Heizkreise vermindert. Es ist auch bekannt, die Messzelle in einem Umluftofen anzuordnen, der eine gleichmäßige Beheizung ermöglicht.

Der mit den bekannten Lösungen verbundene gerätetechnische oder apparative Aufwand ist jedoch relativ groß.

Gemäß der Erfindung wird dieser Aufwand verringert durch eine beheizbare Durchflussmesszelle für einen Gasanalysator, mit einem inneren Rohr aus korrosionsbeständigem Material, das an beiden Enden mit jeweils einem Endstück und einen darin gehaltenen strahlungsdurchlässigen Fenster abgeschlossen ist, mit jeweils einer elektrischen Heizvorrichtung zum Aufheizen der Endstücke, mit einem das innere Rohr koaxial unter Bildung eines engen Spaltes umgebenden äußeren Rohr aus gut wärmeleitendem Material und mit einer das äußere Rohr umgebenden Wärmeisolierung (10), wobei die Heizvorrichtungen nur in den Endstücken integriert sind oder nur außen an den Endstücken anliegen.

Das innere Rohr bildet die korrosionsfeste Innenwand der Messzelle und besteht aus einem gegenüber dem Messgas korrosionsbeständigem Material, wie z. B. Edelstahl, Tantal, Polytetrafluorethylen (PTFE) oder einem Kohlefaserverbund-Werkstoff (Carbon). Solche Materialien weisen eine vergleichsweise geringe Wärmeleitfähigkeit auf. Das aus gut wärmeleitendem Material, wie Aluminium oder Kupfer, bestehende äußere Rohr sorgt in Verbindung mit der darauf liegenden Wärmeisolierung für eine gleichmäßige Wärmeverteilung in axialer Richtung, so dass sich kein nennenswerter Temperaturgradient über die Länge des inneren Rohres ausbilden kann. Es genügt daher, die rohrförmige Messzelle lediglich an den Enden zu beheizen, so dass nur zwei Heizvorrichtungen benötigt werden. Diese sind in den das innere Rohr beidendig abschließenden und mit Fenstern versehenen Endstücken integriert oder liegen von außen an den Endstücken an. Die zum Zuführen und Abführen des Messgases erforderlichen Gasanschlüsse können direkt an dem inneren Rohr im Bereich seiner Enden oder in den Endstücken vorgesehen werden, wobei das Messgas auch beispielsweise über einen Gasanschluss in der Rohrmitte zugeführt und in beiden Endbereichen abgeführt werden kann.

Zur weiteren Erläuterung der Erfindung wird im Folgenden auf die Zeichnung Bezug genommen, in der
- Figur 1: ein erstes Ausführungsbeispiel und
- Figur 2: ein weiteres Ausführungsbeispiel der erfindungsgemäßen Durchflussmesszelle und zeigen.

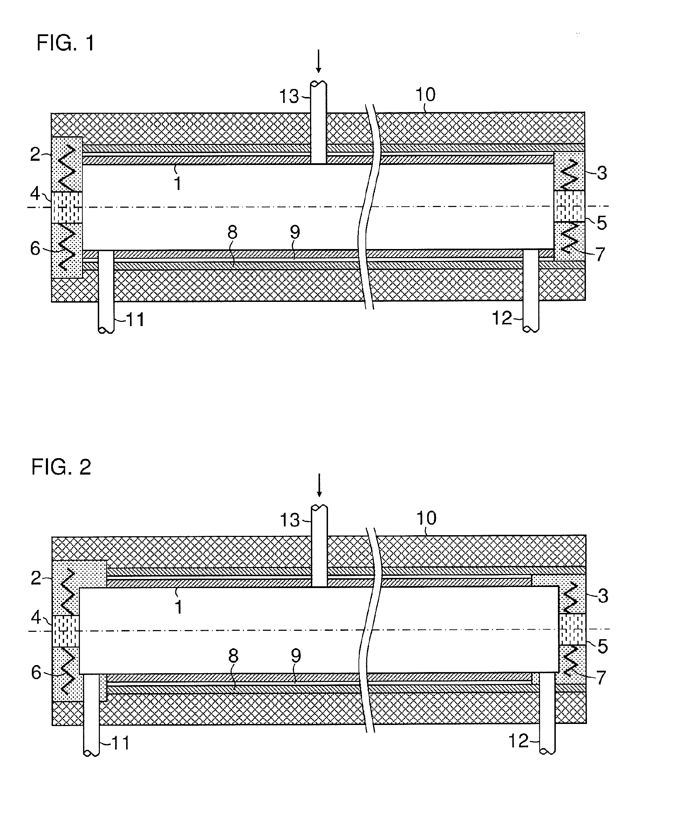

Figur 1 zeigt eine Durchflussmesszelle für einen hier nicht gezeigten Gasanalysator. Die Messzelle besteht aus einem inneren Edelstahlrohr 1, das an seinen Enden mit zwei Endstücken 2, 3 aus demselben oder einem anderen korrosionsfesten Material abgeschlossen ist. Jedes der beiden Endstücke 2, 3 enthält ein strahlungsdurchlässiges Fenster 4, und eine elektrische Heizvorrichtung 6, 7. Die Heizvorrichtung 6, 7 kann auch außen an dem jeweiligen Endstück 2, 3 montiert sein. Das Edelstahlrohr 1 ist koaxial von einem äußeren Aluminium- oder Kupferrohr 8 umgeben, das, wie in der linken Bildhälfte am Beispiel des Endstücks 2 gezeigt, zwischen den Endstücken 2, 3 gehalten ist oder, wie in der rechten Bildhälfte am Beispiel des Endstücks 3 gezeigt, auf den Endstücken 2, 3 aufliegt. Um eine lange Messstrecke zu erhalten und gleichzeitig das Durchflussvolumen der Messzelle gering zu halten, ist das Verhältnis von Länge zu Durchmesser des Edelstahlrohres 1 größer als 10 (z. B. Durchmesser 4 cm, Länge 100 cm). Zwischen den beiden Rohren 1 und 8 ist ein Spalt 9 vorgesehen, um Fertigungstoleranzen und unterschiedlichen Wärmeausdehnungen der Rohre 1 und 8 Rechnung zu tragen. Der Spalt 9 ist so dimensioniert, dass über die Wärmeleitfähigkeit eines darin befindlichen Gases (z. B. Luft) oder anderen Materials (z. B. Wärmeleitpaste) eine hinreichende thermische Kopplung des vergleichsweise schlecht wärmeleitenden Edelstahlrohres 1 an das vergleichsweise gut wärmeleitende Aluminium- oder Kupferrohr 8 vermittelt wird. Auf dem Aluminium- oder Kupferrohr 8 ist eine Wärmeisolierung 10 aufgebracht, die so ausgelegt ist, dass ein Temperatureinfluss der Umgebungstemperatur auf das Aluminium- oder Kupferrohr 8 unter vorgegebenen Grenzen bleibt.

Die zum Zuführen und Abführen des Messgases erforderlichen Gasanschlüsse 11, 12 können entsprechend der Darstellung in Figur 1 direkt an dem Edelstahlrohr 1 im Bereich seiner Enden oder, wie Figur 2 zeigt, in den Endstücken 2, 3 angeordnet sein, wobei das Messgas auch über einen Gasanschluss 13 in der Rohrmitte zugeführt und über die Gasanschlüsse 11, 12 in den beiden Endbereichen abgeführt werden kann.

## Patentansprüche

1. Beheizbare Durchflussmesszelle für einen Gasanalysator, mit einem inneren Rohr (1) aus korrosionsbeständigem Material, das an beiden Enden mit jeweils einem Endstück (2, 3) und einen darin gehaltenen strahlungsdurchlässigen Fenster (4, 5) abgeschlossen ist, mit jeweils einer elektrischen Heizvorrichtung (6, 7) zum Aufheizen der Endstücke (2, 3), mit einem das innere Rohr (1) koaxial unter Bildung eines engen Spaltes (9) umgebenden äußeren Rohr (8) aus gut wärmeleitendem Material und mit einer das äußere Rohr (8) umgebenden Wärmeisolierung (10), wobei die Heizvorrichtungen (6, 7) nur in den Endstücken (2, 3) integriert sind oder nur außen an den Endstücken (2, 3) anliegen.

2. Beheizbare Durchflussmesszelle nach Anspruch 1, **dadurch gekennzeichnet, dass** das innere Rohr (1) aus einem der folgenden Materialien besteht: Edelstahl, Tantal, PTFE, Kohlefaserverbund-Werkkstoff.

3. Beheizbare Durchflussmesszelle nach Anspruch 1 oder 2, **dadurch gekennzeichnet, dass** das äußere Rohr (8) aus einem der folgenden Materialien besteht: Aluminium, Kupfer.

4. Beheizbare Durchflussmesszelle nach einem der Ansprüche 1 bis 3, **dadurch gekennzeichnet, dass** das innere Rohr (1) im Bereich seiner Enden jeweils einen Gasanschluss (11, 12) aufweist.

5. Beheizbare Durchflussmesszelle nach einem der Ansprüche 1 bis 3, **dadurch gekennzeichnet, dass** die Endstücke (2, 3) jeweils einen Gasanschluss (11, 12) aufweisen.

## Claims

1. Heatable flow-through measurement cell for a gas analyzer, comprising an inner tube (1) which is made of corrosion-resistant material and is terminated at each end with a respective end piece (2, 3) and a radiolucent window (4, 5) held therein, each having an electrical heating apparatus (6, 7) for heating the end pieces (2, 3), comprising an outer tube (8) which is made of material with good thermal conductivity and surrounds the inner tube (1) coaxially so as to form a narrow gap (9), and comprising thermal insulation (10) which surrounds the outer tube (8), wherein the heating apparatuses (6, 7) are integrated only in the end pieces (2, 3) or abut against only the outside of the end pieces (2, 3).

2. Heatable flow-through measurement cell according to Claim 1, **characterized in that** the inner tube (1) consists of one of the following materials: high-grade steel, tantalum, PTFE, carbon fiber composite material.

3. Heatable flow-through measurement cell according to Claim 1 or 2, **characterized in that** the outer tube (8) consists of one of the following materials: aluminum, copper.

4. Heatable flow-through measurement cell according to one of Claims 1 to 3, **characterized in that** the inner tube (1) has a respective gas connection (11, 12) in the region of each end thereof.

5. Heatable flow-through measurement cell according to one of Claims 1 to 3, **characterized in that** the end pieces (2, 3) each have a gas connection (11, 12).

## Revendications

1. Cellule de mesure de débit pouvant être chauffée pour un analyseur de gaz, comprenant un tuyau (1) intérieur en matériau résistant à la corrosion, qui est fermé aux deux extrémités par respectivement un embout (2, 3) et un hublot (4, 5) perméable au rayonnement qui y est maintenu, comprenant respectivement un dispositif (6, 7) électrique de chauffage pour le chauffage des embouts (2, 3), comprenant un tuyau (8) extérieur en un matériau bon conducteur de la chaleur entourant coaxialement le tuyau (1) intérieur avec formation d'une fente étroite et comprenant une isolation (10) vis-à-vis de la chaleur entourant le tuyau (8) extérieur, les dispositifs (6, 7) de chauffage étant intégrés seulement aux embouts (2, 3) ou ne s'appliquant qu'extérieurement aux embouts (2, 3).

2. Cellule de mesure de débit pouvant être chauffée suivant la revendication 1,
**caractérisée en ce que** le tuyau (1) intérieur est en l'un des matériaux suivants : acier fin, tantale, PTFE, matériau composite à fibre de carbone.

3. Cellule de mesure de débit pouvant être chauffée suivant la revendication 1 ou 2,
**caractérisée en ce que** le tuyau (8) extérieur est en l'un des matériaux suivants : aluminium, cuivre.

4. Cellule de mesure de débit pouvant être chauffée suivant l'une des revendications 1 à 3,
**caractérisée en ce que** le tuyau (1) intérieur a, dans la région de ses extrémités, respectivement un raccord (11, 12) pour du gaz.

5. Cellule de mesure de débit pouvant être chauffée suivant l'une des revendications 1 à 3,
**caractérisée en ce que** les embouts (2, 3) ont respectivement un raccord (11, 12) pour du gaz.
